# EUROPÄISCHE PATENTSCHRIFT

(11) **EP 2 042 786 B1**
(45) Veröffentlichungstag und Bekanntmachung des Hinweises auf die Patenterteilung: **06.01.2010**
(21) Anmeldenummer: 07018785.1
(22) Anmeldetag: 25.09.2007
(51) Int. Cl.: F16J 15/06

(54) **Dichtung und Dichtungsanordnung mit einer solchen Dichtung**
Seal and seal assembly with such a seal
Joint et agencement de joint doté de celui-ci

(43) Veröffentlichungstag der Anmeldung: 01.04.2009
(73) Patentinhaber: Carl Freudenberg KG, 69469 Weinheim (DE)
(72) Erfinder: Lauer, Frank, 69168 Wiesloch (DE); Unger, Hans, 69518 Abtsteinach (DE); Heldmann, Ralf, 69483 Wald-Michelbach (DE)

(56) Entgegenhaltungen:
- EP-A- 1 160 492
- DE-A- 10 356 763
- US-A- 3 730 537

## Beschreibung

### Technisches Gebiet

Die Erfindung betrifft eine Dichtung, umfassend einen Stützkörper aus zähhartem Werkstoff und einen Dichtkörper aus gummielastischem Werkstoff, der den Stützkörper zumindest teilweise umschließt.
Außerdem betrifft die Erfindung eine Dichtungsanordnung mit einer solchen Dichtung.

### Stand der Technik

Aus der EP 1 160 492 A2 ist ein Radialwellendichtung in Form einer Kassettendichtung bekannt, der einen Stützkörper in Form eines Winkelblechs aufweist. Der Dichtring umfasst einen Sensor zur Drehzahlerfassung, wobei der Sensor zur Übertragung der Signale elektrisch leitend mit Kabeln verbunden ist und wobei die Kabel in ein Gehäuse eingegossen sind, das ortsfest und relativ unverdrehbar mit dem Stützkörper verbunden ist.

Aus der US 3,730,537 ist eine Dichtung bekannt, die zwei axial zueinander angeordnete Flansche gegeneinander abdichtet. Die Dichtung weist eine Einrichtung zur Ausrichtung der Dichtung bezogen auf die beiden Flansche auf, wobei die Einrichtung mit einem Handgriff versehen ist, der das Handling zur Positionierung der Dichtung zwischen den beiden Flanschen erleichtert.

Aus der DE 103 56 763 A1 ist eine metallische Flachdichtung bekannt, wobei die Flachdichtung eine Vorrichtung zur Aufnahme, Fixierung oder Führung von Kabeln, Schläuchen, Rohren und/oden anderen Bauteilen aufweist. Die Vorrichtung kann als Lasche oder Spange ausgebildet sein und ist Bestandteil einer Dichtungslage der Flachdichtung.

Dichtungen und Dichtungsanordnungen mit Dichtungen sind außerdem allgemein bekannt. Die Dichtungen sind bespielsweise als Radialwellendichtringe zur Abdichtung von Wellen ausgebildet oder als so genannte Steckstücke, die benachbart zueinander angeordnete Gehäuseteile wie beispielsweise Motorblock und Getriebe von Kraftfahrzeugen, flüssigkeitsdicht miteinander verbinden.

Für viele Anwendungsfälle ist es erforderlich, in der Peripherie der Dichtungen/Dichtungsanordnungen Kabel, Leitungen oder Schläuche zu befestigen, ohne dass diese während der Gebrauchsdauer ihre Lage unerwünscht verändern sollen. Dazu wurden bisher Befestigungseinrichtungen zur Aufnahme von Kabeln, Leitungen oder Schläuchen oder Schlauchschellen verwendet, die separat hergestellt, getrennt von Dichtung/Dichtumgsanordnung montiert und irgendwo im Einbauraum befestigt wurden.

### Darstellung der Erfindung

Der Erfindung liegt die Aufgabe zu Grunde, eine Dichtung und eine Dichtungsanordnung der eingangs genannten Art derart weiterzuentwickeln, dass die erfindungsgemäße Dichtung und die erfindungsgemäße Dichtungsanordnung eine periphere Befestigung von Kabeln, Leitungen oder Schläuchen erleichtern.

Diese Aufgabe wird erfindungsgemäß mit den Merkmalen der Ansprüche 1 und 13 gelöst. Auf vorteithafte Ausgestaltungen nehmen die Unteransprüche Bezug.

Zur Lösung der Aufgabe ist eine Dichtung vorgesehen, die als Steckstück ausgebildet ist, wobei das Steckstück einen hülsenförmigen Stützkörper aufweist, der außenumfangsseitig von dem Dichtkörper ummantelt ist, wobei der Dichtkörper im Bereich seiner beiden Stirnseiten jeweils einen Dichtwulst aufweist, wobei jeder Dichtwulst, im Längsschnitt betrachtet radial nach außen oder innen gewölbt ausgebildet ist und wobei in axialer Richtung zwischen den Dichtwulsten eine radial nach außen vorspringende Befestigungseinrichtung zur Aufnahme von Kabeln, Leitungen oder Schläuchen angeordnet ist. Hierbei ist von Vorteil, dass durch die im Wesentlichen ortsfeste Zuordnung der einrichtung zur Aufnahme von Kabeln, Leitungen oder Schläuchen zum Stützkörper und/oder zum Dichtkörpers und damit zur Dichtung/Dichtungsanordnung eine einfache Möglichkeit zur Befestigung von Kabeln, Leitungen oder Schläuchen gegeben ist, ohne dass es einer separaten Herstellung und einer separaten Montage von Befestigungseinrichtungen zur Aufnahme von Kabeln, Leitungen oder Schläuchen oder Schlauchschellen bedarf. Auch während einer langen Gebrauchsdauerder Dichtung/der Dichtungsanordnung bleibt deren räumliche Zuordnung zur Befestigungseinrichtung zur Aufnahme von Kabeln, Leitungen oder Schläuchen unverändert erhalten, so dass auch eine unerwünscht räumliche Verschiebung von aufgenommenen Kabeln, Leitungen oder Schläuchen ausgeschlossen ist. Die Dichtung mit integrierter Befestigungseinrichtung zur Aufnahme von Kabeln, Leitungen oder Schläuchen oder die Dichtungsanordnung, die die Dichtung mit integrierter Befestigungseinrichtung zur Aufnahme von Kabeln, Leitungen oder Schläuchen umfasst, ist einfach und kostengünstig herstellbar. Insbesondere die Montage der Dichtung/der Dichtungsanordnung, jeweils mit integrierter Befestigungseinrichtung zur Aufnahme von Kabeln, Leistungen oder Schläuchen, ist einfach; die Gefahr von Montagefehlern ist auf ein Minimum begrenzt.

Die Dichtwulste sind üblicherweise in Bohrungen von einander benachbarten Gehäusen dichtend angeordnet. Die Befestigungseinrichtung zur Aufnahme von Kabeln, Leitungen oder Schläuchen befindet sich dann in dem durch den Abstand zwischen den Gehäusen gebildeten Spalt.

Generell besteht die Möglichkeit, dass der Stützkörper mit einer als Lasche ausgebildeten Befestigungseinrichtung zur Aufnahme von Kabeln, Leitungen oder Schläuchen verbunden ist. Die Verbindung von Stutzkörper und Befestigungseinrichtung zur Aufnahme von Kabeln, Leitungen oder Schläuchen kann dabei mittelbar oder unmittelbar erfolgen. Die Befestigungseinrichtung zur Aufnahme von Kabeln, Leitungen oder Schläuchen würde dann z.B. ebenso, wie der Stützkörper, aus demselben zähharten Werkstoff bestehen. Die Anbindung der Befestigungseinrichtung zur Aufnahme von Kabeln, Leitungen oder Schläuchen an den Stützkörper ist zwar elastisch nachgiebig, werkstoffbedingt aber vergleichsweise steif. Falls der Stützkörper aus einem metallischen Werkstoff besteht, ist von Vorteil, wenn die als Lasche ausgebildete Befestigungseinrichtung zur Aufnahme von Kabeln, Leitungen oder Schläuchen mit einer Korrosion verhindernden Beschichtung versehen ist. Eine solche Beschichtung nn beispielsweise durch eine Lackierung oder eine Prüferbeschichtung der Befestigungseinrichtung zur Aufnahme von Kabeln, Leitungen oder Schläuchen erzeugt sein.

Zusätzlich oder alternativ kann der Dichtkörper mit einer als angeformte Elastomerlasche ausgebildeten Befestigungseinrichtung zur Aufnahme von Kabeln, Leitungen oder Schläuchen verbunden sein. Besteht die Elastomerlasche vollständig aus elastomerem Werkstoff, ist sie ebenfalls elastisch nachgiebig, jedoch leichter verformbar als die Lasche, die materialeinheitlich mit dem Stützkörper ausgebildet ist. Einer separat aufzubringenden Beschichtung gegen Korrosion bedarf es nicht. Eine solche Dichtung mit integrierter Befestigungseinrichtung zur Aufnahme von Kabeln. Leitungen oder Schläuchen/Dichtungsanordnung ist besonders einfach und kostengünstig herstellbar.

Der Stützkörper und die Befestigungseinrichtung zur Aufnahme von Kabeln, Leitungen oder Schläuchen oder der Dichtkörper und die Befestigungseinrichtung zur Aufnahme von Kabeln, Leitungen oder Schläuchen sind bevorzugt einstückig ineinander übergehend und materialeinheitlich ausgebildet. Durch die herstellungsbedingte Einstückigkeit ist die Befestigungseinrichtung zur Aufnahme von Kabeln, Leitungen oder Schläuchen gleichzeitig mit der Montage der Dichtung ebenfalls montiert.

Die Befestigungseinrichtung zur Aufnahme von Kabeln, Leitungen oder Schläuchen kann einen Innenträger aufweisen, der mit dem Stützkörper verbunden ist, wobei der Innenträger vom gummielastischen Werkstoff des Dichtkörpers vollständig ummantelt ist. Der Innenträger übernimmt die Funktion einer Armierung und sorgt für eine gute Formbeständigkeit der Befestigungseinrichtung zur Aufnahme von Kabeln, Leitungen der Schläuchen, wobei die Ummantelung einen Korrosionsschutz für die Befestigungseinrichtung zur Aufnahme von Kabeln, Leitungen oder Schläuchen und gleichzeitig einen Schutz für das aufzunehmende Kabel bildet.

Die Befestigungseinrichtung zur Aufnahme von Kabeln, Leitungen oder Schläuchen kann eine Öse zur Aufnahme eines Kabels aufweisen. Die Form der Öse richtet sich dabei generell nach der Form des aufzunehmenden Kabels.

Die Öse kann beispielsweise ringförmig in sich geschlossen ausgebildet sein. Das aufzunehmende Kabel wird dann mit einem seiner Enden durch die Öse geführt. Durch die in sich geschlossene Gestalt der Öse wird das Kabel sehr sicher in der Befestigungseinrichtung zur Aufnahme von Kabeln, Leitungen oder Schläuchen gehalten, auch dann, wenn Kräfte auf das Kabel wirken und/oder das Kabel in seiner axialen Richtung innerhalb der Öse hin- und hergeschoben wird.

Nach einer anderen Ausgestaltung kann die Öse U-förmig ausgebildet sein, wobei ihre offenen Enden durch einen stegförmigen Verschluss verbindbar sind. Eine solche Öse zur Aufnahme eines Kabels ist dann von Vorteil, wenn das Kabel montiert werden muss, ohne dass es ein freies Kabelende gibt, beispielsweise dadurch, dass das Kabel mit seinen beiden Kabelenden bereits angeschlossen ist. Ein bereits montiertes Kabel kann dann in die U-förmige Öse eingelegt werden. Zur Sicherung des Kabels in der Öse gegen ein Herausrutschen werden die beiden offenen Enden bei eingelegtem Kabel durch den stegförmigen Verschluss miteinander verbunden. Bei einer solchen Ausgestaltung der Öse ist von Vorteil, dass das Kabel einerseits sicher in der Befestigungseinrichtung zur Aufnahme von Kabeln, Leitungen oder Schläuchen gehalten ist und trotzdem bedarfsweise mit minimalem Aufwand auch wieder von der Befestigungseinrichtung zur Aufnahme von Kabeln, Leitungen oder Schläuchen getrennt werden kann.

Eine funktional genauso vorteilhafte Ausgestaltung wie die U-förmige Öse bildet eine Öse, die dreiviertelkreisförmig ausgebildet ist. Eine solche Befestigungseinrichtung zur Aufnahme von Kabeln, Leitungen oder Schläuchen hat einen besonders teilearmen Aufbau, da im Vergleich zu der zuvor beschriebenen Befestigungseinrichtung zur Aufnahme von Kabeln, Leitungen oder Schläuchen der stegförmige Verschluss entfällt. Die Verbindung zwischen Befestigungseinrichtung zur Aufnahme von Kabeln, Leitungen oder Schläuchen und Kabel wird durch einen Formschluss erreicht. Ein im Querschnitt kreisrundes Kabel wird durch die viertelkreisförmige Öffnung der Öse gedrückt, bis das Kabel in die Öse einschnappt. Auch bei einer solchen Öse kann das Kabel von der Befestigungseinrichtung zur Aufnahme von Kabeln, Leitungen oder Schläuchen getrennt werden, ohne dass zumindest eines der Kabelenden des Kabels vorher demontiert werden müsste.

Der Dichtkörper kann einen angeformten Halter aufweisen, mit dem eine mit einer Öse ausgebildete Befestigungseinrichtung zur Aufnahme von Kabeln, Leitungen oder Schläuchen kraft-und/oder formschlüssig verbunden ist. Hierbei ist von Vorteil, dass der Dichtkörper mit integrierter Befestigungseinrichtung zur Aufnahme von Kabeln, Leitungen oder Schläuchen nach Art eines Baukastens aufgebaut ist. Die Form der Öse kann problemlos an die Form des aufzunehmenden Kabels angepasst werden. Beispielsweise besteht die Möglichkeit, eine bisherige alte Befestigungseinrichtung zur Aufnahme von Kabeln. Leitungen oder Schläuchen aus dem Halter zu entfernen und eine neue Befestigungseinrichtung zur Aufnahme von Kabeln, Leitungen oder Schläuchen, die anders gestaltet ist, mit dem Halter zu verbinden. Diese Änderung kann erfolgen, ohne dass die Dichtung selbst ausgewechselt werden müsste.
Dadurch, dass die Befestigungseinrichtung zur Aufnahme von Kabeln, Leitungen oder Schläuchen und die Öse als separate Bauteile ausgeführt sind und nicht einen einstückigen und materialeinheitlichen Bestandteil des Stützkörpers oder des Dichtkörpers bilden, kann die mit der Öse ausgebildete Befestigungseinrichtung zur Aufnahme von Kabeln, Leitungen oder Schläuchen innerhalb des Halters um ihre Achse gedreht werden. Hierbei ist von Vorteil, dass die Lage der Öse an die Lage des Kabels angepasst werden kann. Auch Lageveränderungen des Kabels kann die Befestigungseinrichtung zur Aufnahme von Kabeln, Leitungen oder Schläuchen durch ihre Verdrehbarkeit innerhalb des Halters selbsttätig folgen. Durch diese Verdrehbarkeit der Befestigungseinrichtung zur Aufnahme von Kabeln, Leitungen oder Schläuchen werden unerwünscht hohe mechanische Belastungen auf das Kabel bei der Veränderung seiner Lage, bezogen auf die Dichtung/Dichtungsanordnung, verhindert.

Eine besonders einfache Auswechselbarkeit der an den jeweiligen Anwendungsfall angepassten Öse ist gegeben, wenn del Halter einen Hinterschnitt aufweist, in dem ein kongruent gestalteter Vorsprung der Befestigungseinrichtung zur Aufnahme von Kabeln, Leitungen oder Schläuchen eingeschnappt ist. Der Hinterschnitt des Halters, der aus dem elastisch nachgiebigen Werkstoff des Dichtkörpers besteht, kann bei Demontage und Montage einer Befestigungseinrichtung zur Aufnahme von Kabeln, Leitungen oder Schläuchen jeweils durch die Demontagen- und Montagekraft elastisch nachgiebig verformt werden. Ein Auswechseln der Befestigungseinrichtung zur Aufnahme von Kabeln, Leitungen oder Schläuchen mit Öse ist dadurch besonders einfach möglich.

Der Stützkörper und/oder der Innenträger können aus einem metallischen oder polymeren Werkstoff bestehen.

Die Erfindung betrifft außerdem eine Dichtungsanordnung, umfassend eine Dichtung, wie zuvor beschrieben, die axial zueinander beabstandete Gehäuseteile dichtend miteinander verbindet.
Steckstücke, jedoch ohne integrierte Befestigungseinrichtung zur Aufnahme von Kabeln, Leitungen oder Schläuchen, sind in unsterschiedlich Ausführungen allgemein bekannt. Steckstücke gelangen beispielsweise zwischen Motor und Getriebe von Kraftfahrzeugen zur Anwendung.

Nachfolgend werden vier. Ausführungsbeispiele anhand der Figuren 1 bis 5 näher erläutert. Diese zeigen:

### Kurzbeschreibung der Zeichnung

- Figur 1: ein erstes Ausführungsbeispiel der erfindungsgemäßen Dichtungsanordnung mit der erfindungsgemäßen Dichtung,
- Figur 2: ein zweites Ausführungsbeispiel, mit einer abweichend von Figur 1 gestalteten Befestigungseinrichtung zur Aufnahme von Kabeln, Leitun- gen oder Schläuchen,
- Figur 3: ein drittes Ausführungsbeispiel, dessen Befestigungseinrichtung zur Auf- nahme von Kabeln, Leitungen oder Schläuchen von den Befestigungsein- richtungen zur Aufnahme von Kabeln, Leitungen oder Schläuchen aus den Figuren 1 und 2 abweicht,
- Figur 4: ein viertes Ausführungsbeispiel einer Dichtung im Längsschnitt mit einer in einem Halter angeordneten Befestigungseinrichtung zur Auf- nahme von Kabeln, Leitungen oder Schläuchen;
- Figur 5: das vierte Ausführungsbeispiel aus Figur 4, bei dem die Befestigungsein- richtung zur Aufnahme von Kabeln, Wertungen oder Schläuchen aus dem Halter entfernt ist.

### Ausführung der Erfindung

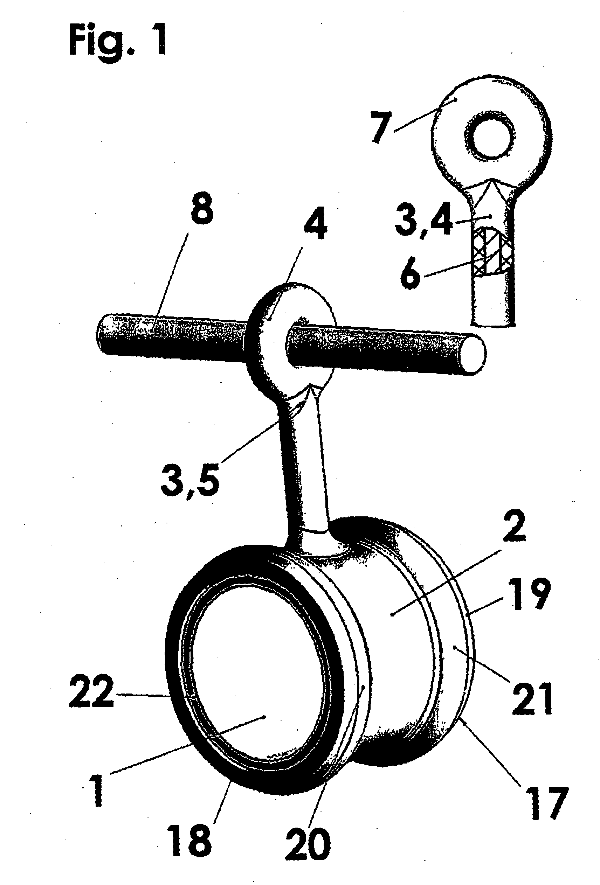

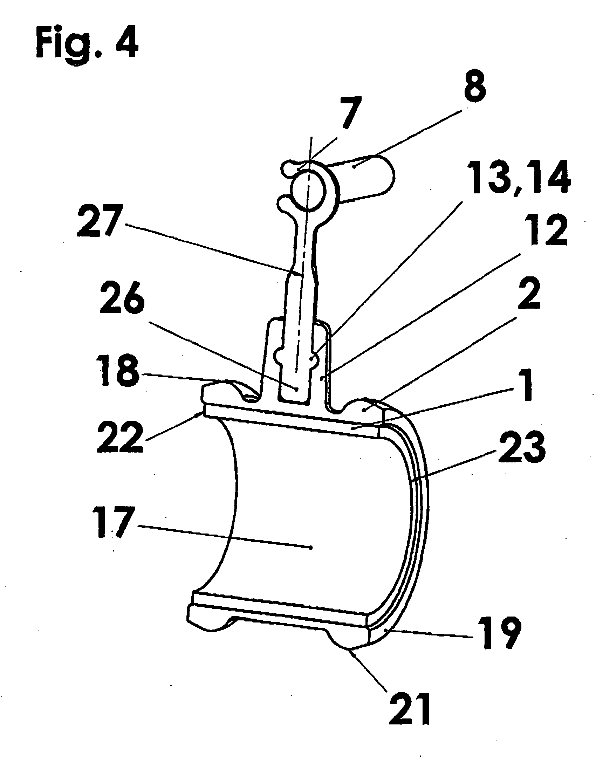

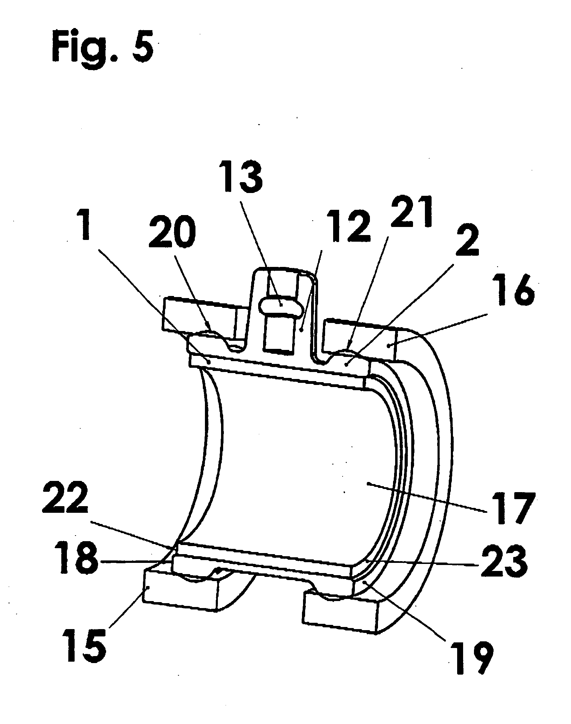

In den Figuren 1 bis 5 sind vier Ausführungsbeispiele von Dichtungen/Dichtungsanordnungen gezeigt.
In jedem Ausführungsbeispiel ist eine Dichtung gezeigt, die als Steckstück 17 ausgebildet ist und die einen Stützkörper 1 aus einem zähharten Werkstoff umfasst. Der Stützkörper 1 kann aus einem metallischen Werkstoff oder einem polymeren Werkstoff bestehen, abhängig vom abzudichtenden Medium und vom jeweiligen Anwendungsfall.
Der Dichtkörper 2 besteht in den Ausführungsbeispielen jeweils aus einem elastomeren Werkstoff, der den Stützkörper 1 außenumfangsseitig vollständig umschließt. Die Stirnseiten 22, 23 des Stützkörpers 1 sind jeweils nicht vom elastomeren Werkstoff des Dichtkörpers 2 überdeckt; wie in den Figuren 4 und 5 deutlich zu erkennen, ragt der elastomere Werkstoff des Dichtkörpers 2 stirnseitig beiderseits in axialer Richtung jeweils mit seinen beiden Stirnseiten -18,19 über die Stirnseiten 22, 23 des Stützkörper 1.

In jedem der Ausführungsbeispiele weist die Dichtung eine integrierte Befestigungs einrichtung 3 zur Aufnahme von Kabeln 8, Leitungen oder Schläuchen auf. Der Stützkörper 1 und/oder der Dichtkörper 2 sind mit dieser Befestigungseinrichtung 3 zur Aufnahme von Kabeln 8, Leitungen oder Schläuchen ausgebildet. Das Steckstück 17 ist in den gezeigten Ausführungsbeispielen zwischen zwei schematisch dargestellten gegeneinander abzudichtenden Gehäuseteilen 15, 16 angeordnet. Der Dichtkörper 2 weist im Bereich seiner beiden Stirnseiten 18, 19 jeweils einen Dichtwulst 20, 21 auf, wobei jeder Dichtwulst 20, 21 radial nach außen gewölbt ausgebildet ist. In axialer Richtung zwischen den Dichtwulsten 20, 21 springt die Halteeinrichtung 3 zur Aufnahme von Kabeln 8, Leitungen oder Schläuchen radial nach außen vor.

In Figur 1 ist ein erstes Ausführungsbeispiel gezeigt. Die Befestigungseinrichtung 3 zur Aufnahme von Kabeln 8, Leitungen oder Schläuchen ist als eine an den Dichtkörper 2 angeformte Elastomerlasche 5 ausgebildet, wobei der Dichtkörper 2 und die Befestigungseinrichtung 3 zur Aufnahme von Kabeln 8, Leitungen oder Schläuchen einstückig ineinander übergehend und materialeinheitlich ausgebildet sind. Die Elastomerlasche 5 einschließlich der Öse 7 bestehen vollständig aus einem elastomeren Werkstoff. Die Elastomerlasche 5 kann bedarfsweise einen Innenträger 6 aufweisen, der eine Armierung zur Steigerung der Festigkeit der Befestigungseinrichtung 3 zur Aufnahme von Kabeln 8, Leitungen oder Schläuchen bildet.
Im dargestellten Ausführungsbeispiel ist die Öse 7 ringförmig in sich geschlossen ausgebildet. Das Kabel 8 wird mit einem seiner Kabelenden von einer Seite durch die Öse 7 geführt.

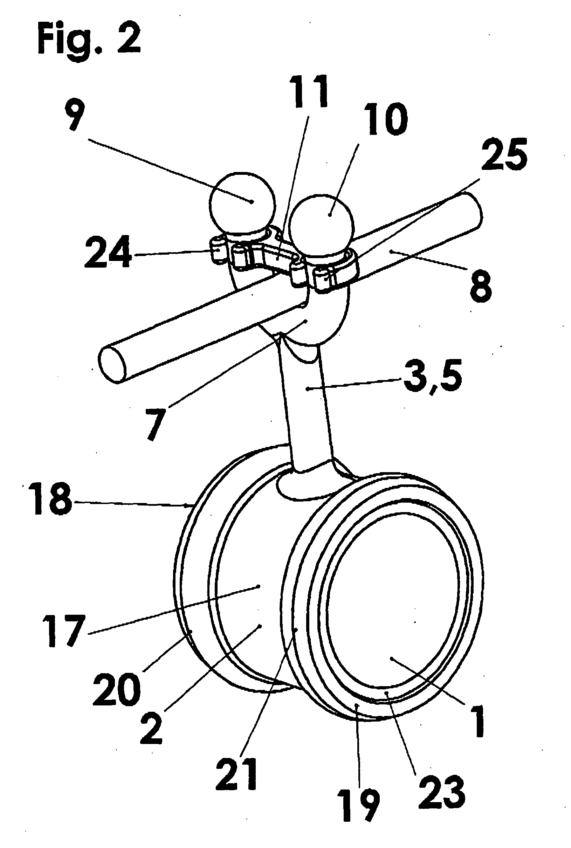

In Figur 2 ist ein zweites Ausführungsbeispiel gezeigt, ähnlich dem Ausführungsbeispiel aus Figur 1, wobei die Öse 7 der Befestigungseineichtung 3 zur Aufnahme von Kabeln 8, Leitungen oder Schläuchen U-förmig ausgebildet ist und offene Enden 9, 10 aufweist. Die offenen Enden 9, 10 sind durch einen stegförmige Verschluss 11 verbunden, so dass das durch die Öse 7 geführte Kabel 8 verliersicher von der Öse 7 umschlossen ist. Der Vorteil einer solchen Ausgestaltung ist in der einfachen Montage und Demontage des Kabels 8 zu sehen.
Der stegförmige Verschluss 11 besteht in dem hier gezeigten Ausführungsbeispiel aus einem polymeren Werkstoff, der durch Haltekrallen 24, 25 formschlüssig mit den Enden 9, 10 in Eingriff gebracht ist. Der stegförmige Verschluss 11 und die Enden 9, 10 sind zerstörungsfrei lösbar miteinander verbunden.

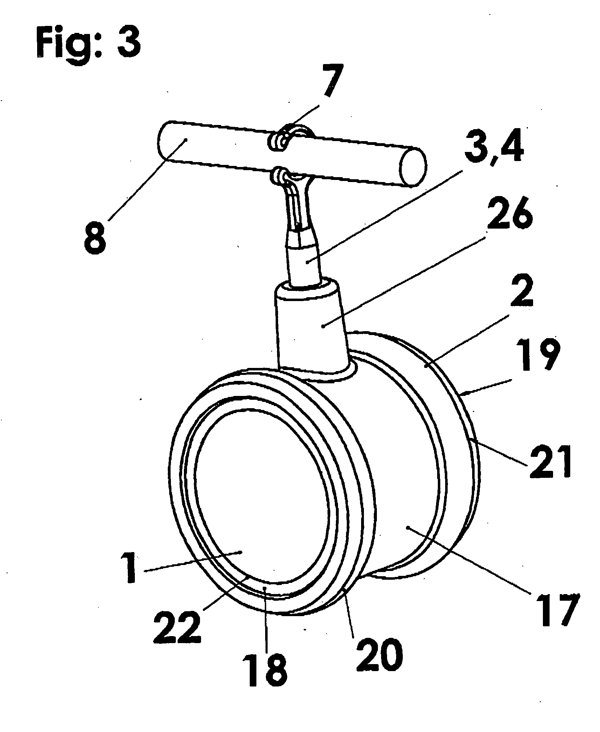

In Figur 3 ist ein drittes Ausführungsbeispiel gezeigt, bei dem der Stützkörper 1 aus einem polymeren Werkstoff besteht und bei dem die Befestigungseinrichtung 3 zur Aufnahme von Kabeln 8, Leitungen oder Schläuchen, im Gegensatz zu den beiden vorherigen Ausführungsbeispielen, bei denen der Dichtkörper 2 und die Befestigungseinrichtung 3 zur Aufnahme von Kabeln 8, Leitungen oder Schläuchen einstückig ineinander übergehend und materialeinheitlich ausgebildet sind, einstückig und materialeinheitlich mit dem Stützkörper 1 ausgeführt ist. Die Befestigungseinrichtung 3 zur Aufnahme von Kabeln 8, Leitungen oder Schläuchen ist im Bereich ihrer Basis 26 vom elastomeren Werkstoff des Dichtkörpers 2 umschlossen. Die Öse 7 ist dreiviertelkreisförmig ausgebildet und umschließt das Kabel 8 formschlüssig.

In den Figuren 4 und 5 ist ein viertes Ausführungsbeispiel einer Dichtung im Längsschnitt gezeigt. In dem Ausfübrungsbeispiel bildet die Befestigungseinrichtung 3 zur Aufnahme von Kabeln 8, Leitungen oder Schläuchen einen Bestandteil des Dichtkörpers 2, ist jedoch als separat hergestelltes Einzelteil ausgebildet und mit dem am Dichtkörper 2 einstückig angeformten Halter 12 kraft- und formschlüssig verbunden. Der aus einem elastomeren Werkstoff bestehende Halter 12 weist einen Hinterschnitt 13 auf, in dem der kongruent gestaltete Vorsprung 14 der Öse 7 eingeschnappt ist. Die Öse 7 selbst ist ähnlich, wie in Figur 3 gezeigt, dreiviertelkreisförmig ausgebildet.
Die Öse 7 besteht aus einem polymeren Werkstoff. Dadurch, dass die Befestigungseinrichtung 3 zur Aufnahme von Kabeln 8, Leitungen oder Schläuchen und die Öse 7 als separates Bauteil ausgeführt sind und nicht, wie in den vorherigen Ausführungsbeispielen gezeigt, einen einstückigen und materialeinheitlichen Bestandteil des Stützkörpers 1 oder des Dichtkörpers 2 bilden, kann die mit der Öse 7 ausgebildete Befestigungseinrichtung 3 zur Aufnahme van Kabeln 8, Leitungen oder Schläuchen innerhalb des Halters 12 um ihre Achse 27 gedreht werden. Hierbei ist von Vorteil, dass die dreiviertelkreisförmige Öse, die natürlich auch anders, wie beispielsweise in den Figuren 1 und 2 dargestellt, ausgeführt sein kann, an die Lage des Kabels 8 angepasst werden kann. Auch Lageveränderungen des Kabels 8 kann die Befestigungseinrichtung 3 zur Aufnahme von Kabeln 8, Leitungen oder Schläuchen durch ihre Verdrehbarkeit innerhalb des Halters 12 folgen. Durch diese Verdrehbarkeit werden unerwünscht hohe mechanische Belastungen auf das Kabel 8 bei dessen Veränderung seiner Lage bezogen auf die Dichtung/Dichtungsanordnung verhindert.
Weiter ist von Vorteil, dass der Dichtkörper 2 mit integrierter Befestigungseinrichtung 3 zur Aufnahme von Kabeln 8, Leitungen oder Schläuchen nach Art eines Baukastens aufgebaut ist. Die Form der Öse 7 kann problemlos an die Form des aufzunehmenden Kabels 8 angepasst werden. Beispielsweise besteht die Möglichkeit, eine bisherige alte Befestigungseinrichtung 3 zur Aufnahme von Kabeln 8, Leitungen oder Schläuchen aus dem Halter 12 zu entfernen und eine neue Befestigungseinrichtung 3 zur Aufnahme von Kabeln 8, Leitungen oder Schläuchen, die anders gestaltet ist, mit dem Halter 12 zu verbinden. Diese Änderung kann erfolgen, ohne dass die Dichtung selbst ausgewechselt werden müsste.

## Patentansprüche

1. Dichtung, umfassend einen Stützkörper (1) aus zähhartem Werkstoff und einen Dichtkörper (2) aus gummielastischem Werkstoff, der den Stützkörper (1) zumindest teilweise umschließt, **dadurch gekennzeichnet, dass** die Dichtung als Steckstück (17) ausgebildet ist, dass das Steckstück (17) einen hülsenförmigen Stützkörper (1) aufweist, der außenumfangsseitig von dem Dichtkörper (2) ummantelt ist, dass der Dichtkörper (2) im Bereich seiner beiden Stirnseiten (18, 19) jeweils einen Dichtwulst (20, 21) aufweist und dass jeder Dichtwulst (20, 21), im Längsschnitt betrachtet, radial nach außen oder innen gewölbt ausgebildet ist und dass in axialer Richtung zwischen den Dichtwulsten (20, 21) eine radial nach außen vorspringende Befestigungseinrichtung (3) zur Aufnahme von Kabeln (8), Leitungen oder Schläuchen angeordnet ist.

2. Dichtung nach Anspruch 1, **dadurch gekennzeichnet, dass** der Stützkörper (1) mit einer als Lasche (4) augebildeten Befestigungseinrichtung (3) zur Aufnahme von Kabeln (8), Leitungen oder Schläuchen verbunden ist.

3. Dichtung nach einem der Ansprüche 1 oder 2, **dadurch gekennzeichnet, dass** der Dichtkörper (2) mit einer als angeformte Elastomerlasche (5) ausgebiideten Befestigunseinrichtung (3) zur Aufnahme von Kabeln (8), Leitungen oder Schläuchen verbunden ist.

4. Dichtung nach einem der Ansprüche 1 bis 3, **dadurch gekennzeichnet, dass** der Stützkörper (1) und die Befestigungseinrichtung (3) zur Aufnahme von Kabeln (8), Leitungen oder Schläuchen oder der Dichtkörper (2) und die Befestigungseinrichtung (3) zur Aufnahme von Kabeln (8), Leitungen oder Schläuchen einstückig ineinander übergehend und materialeinheitlich ausgebildet sind.

5. Dichtung nach einem der Ansprüche 1 bis 4, **dadurch gekennzeichnet, dass** die Befestigungseinrichtung (3) zur Aufnahme von Kabeln (8), Leitungen oder Schläuchen einen Innenträger (6) ausweist, der mit dem Stützkörper (1) verbunden ist und dass der Innenträger (6) vom gummielastischen Werkstoff des Dichtkörpers (2) vollständig ummantelt ist.

6. Dichtung nach einem der Ansprüche1 bis 5 **dadurch gekennzeichnet, dass** die Befestigungseinrichtung (3) zur Aufnahme von Kabeln (8), Leitungen oder Schläuchen eine Öse (7) zur Aufnahme eines Kabels (8) aufweist.

7. Dichtung nach Anspruch 6, **dadurch gekennzeichnet, dass** die Öse (7) ringförmig in sich geschlossen ausgebildet ist.

8. Dichtung nach Anspruch 6, **dadurch gekennzeichnet, dass** die Öse (7) U-förmig ausgebildet ist und dass ihre offenen Enden (9, 10) durch einen stegförmigen Verschluss (11) verbindbar sind.

9. Dichtung nach Anspruch 6, **dadurch gekennzeichnet, dass** die Öse (7) dreiviertelkreisförmig ausgebildet ist.

10. Dichtung nach einem der Ansprüche 1 bis 9, **dadurch gekennzeichnet, dass** der Dichtkörper (2) einen angeformten Halter (12) aufweist, mit dem eine mit einer Öse (7) ausgebildete Befestigungseinrichtung (3) zur Aufnahme von Kabeln (8), Leitungen oder Schläuchen kraft- und/oder formschlüssig verbunden ist.

11. Dichtung nach Anspruch 10, **dadurch gekennzeichnet, dass** der Halter (12) einen Hinterschnitt (13) aufweist, in dem ein kongruent gestalteter Vorsprung (14) der Befestigungseinrichtung (3) zur Aufnahme von Kabeln (8) Leitungen oder Schläuchen eingeschnappt ist.

12. Dichtung nach einem der Ansprüche 1 bis 11, **dadurch gekennzeichnet, dass** der Stützkörper (1) und/oder der Innenträger (6) aus einem metallischen oder polymeren Werkstoff bestehen.

13. Dichtungsanordnung, umfassend eine Dichtung nach einem der Ansprüche 1 bis 12 und zwei gegeneinander abzudichtende Gehäuseteile (15, 16), **dadurch gekennzeichnet, dass** die Dichtung die axial zueinander beabstandeten Gehäuseteile (15, 16) dichtend miteinander verbindet.

## Claims

1. Seal comprising a supporting body (1) of hard-tough material and a sealing body (2) of rubber-elastic material, which at least partially encloses the supporting body (1), **characterized in that** the seal is formed as an insert piece (17), **in that** the insert piece (17) has a sleeve-shaped supporting body (1), which is enclosed on the outer circumferential side by the sealing body (2), **in that** the sealing body (2) has in the region of each of its two end sides (18, 19) a sealing bead (20, 21) and **in that** each sealing bead (20, 21), seen in longitudinal section, is formed to be radially outwardly or inwardly curved and **in that** a radially outwardly projecting fastening device (3) for receiving cables (8), lines or hoses is arranged between the sealing beads (20, 21) in the axial direction.

2. Seal according to Claim 1, **characterized in that** the supporting body (1) is connected to a fastening device (3), formed as a lug (4), for receiving cables (8), lines or hoses.

3. Seal according to either of Claims 1 and 2, **characterized in that** the sealing body (2) is connected to a fastening device (3), formed as a moulded-on elastomeric lug (5), for receiving cables (8), lines or hoses.

4. Seal according to one of Claims 1 is 3, **characterized in that** the supporting body (1) and the fastening device (3) for receiving cables (8), lines or hoses or the sealing body (2) and the fastening device (3) for receiving cables (8), lines or hoses are formed in one piece, merging one into the other and made of one and the same material.

5. Seal according to one of Claims 1 to 4, **characterized in that** the fastening device (3) for receiving cables (8), lines or hoses has an inner carrier (6), which is connected to the supporting body (1), and **in that** the inner carrier (6) is completely enclosed by the rubber-elastic material of the sealing body (2).

6. Seal according to one of Claims 1 to 5, **characterized in that** the fastening device (3) for receiving cables (8), lines or hoses has an eye (7) for receiving a cable (8).

7. Seal according to Claim 6, **characterized in that** the eye (7) is formed continuously as a ring.

8. Seal according to Claim 6, **characterized in that** the eye (7) is formed as a U and **in that** its open ends (9, 10) can be connected by a web-shaped closure (11).

9. Seal according to Claim 6, **characterized in that** the eye (7) is formed as a three-quarter circle.

10. Seal according to one of Claims 1 to 9, **characterized in that** the sealing body (2) has a moulded-on holder (12), with which a fastening device (3), formed with an eye (7), for receiving cables (8), lines or hoses is non-positively and/or positively connected.

11. Seal according to Claim 10, **characterized in that** the holder (12) has an undercut (13), in which a congruently shaped projection (14) of the fastening device (3) for receiving cables (8), lines or hoses is snap-fitted.

12. Seal according to one of Claims 1 to 11, **characterized in that** the supporting body (1) and/or the inner carrier (6) consist of a metallic or polymeric material.

13. Seal assembly, comprising a seal according to one of Claims 1 to 12 and two housing parts (15, 16) to be sealed with respect to each other, **characterized in that** the seal connects the housing parts (15, 16) that are spaced axially apart from each other to each other in a sealing manner.

## Revendications

1. Joint, comprenant un corps de support (1) constitué d'un matériau rigide et un corps d'étanchéité (2) en matériau en plastique élastomère, qui entoure au moins partiellement le corps de support (1), **caractérisé en ce que** le joint est réalisé sous forme de pièce enfichable (17), **en ce que** la pièce enfichable (17) présente un corps de support (1) en forme de douille, qui est enveloppé du côté de la périphérie extérieure par le corps d'étanchéité (2), **en ce que** le corps d'étanchéité (2) présente, dans la région de ses deux côtés frontaux (18, 19) à chaque fois un bourrelet d'étanchéité (20, 21) et **en ce que** chaque bourrelet d'étanchéité (20, 21), considéré en coupe longitudinale, est réalisé avec une courbure radiale vers l'extérieur ou vers l'intérieur, et **en ce que** dans la direction axiale entre les bourrelets d'étanchéité (20, 21) est disposé un dispositif de fixation (3) saillant radialement vers l'extérieur pour recevoir des câbles (8), des conduites ou des tuyaux.

2. Joint selon la revendication 1, **caractérisé en ce que** le corps de support (1) est connecté à un dispositif de fixation (3) réalisé sous forme de patte (4) pour recevoir des câbles (8), des conduites ou des tuyaux.

3. Joint selon l'une quelconque des revendications 1 ou 2, **caractérisé en ce que** le corps d'étanchéité (2) est connecté à un dispositif de fixation (3) réalisé sous forme de patte élastomère moulée (5), pour recevoir des câbles (8), des conduites ou des tuyaux.

4. Joint selon l'une quelconque des revendications 1 à 3, **caractérisé en ce que** le corps de support (1) et le dispositif de fixation (3) sont réalisés pour recevoir des câbles (8), des conduites ou des tuyaux ou le corps d'étanchéité (2) et le dispositif de fixation (3) sont réalisés pour recevoir des câbles (8), des conduites ou des tuyaux, et ce par une réalisation venue de matière et se prolongeant d'une seule pièce l'un dans l'autre.

5. Joint selon l'une quelconque des revendications 1 à 4, **caractérisé en ce que** le dispositif de fixation (3) présente, pour recevoir des câbles (8), des conduites ou des tuyaux, un support interne (6) qui est connecté au corps de support (1) et **en ce que** le support interne (6) est complètement enveloppé par le matériau en plastique élastomère du corps d'étanchéité (2).

6. Joint selon l'une quelconque des revendications 1 à 5, **caractérisé en ce que** le dispositif de fixation (3) pour recevoir des câbles (8), des conduites ou des tuyaux, présente un oeillet (7) pour recevoir un câble (8).

7. Joint selon la revendication 6, **caractérisé en ce que** l'oeillet (7) est réalisé de manière annulaire et fermée en soi.

8. Joint selon la revendication 6, **caractérisé en ce que** l'oeillet (7) est réalisé en forme de U et **en ce que** ses extrémités ouvertes (9, 10) peuvent être connectées par une fermeture en forme de nervure (11).

9. Joint selon la revendication 6, **caractérisé en ce que** l'oeillet (7) est réalisé en forme trois quarts de cercle.

10. Joint selon l'une quelconque des revendications 1 à 9, **caractérisé en ce que** le corps d'étanchéité (2) présente un dispositif de retenue moulé (12), avec lequel un dispositif de fixation (3) réalisé avec un oeillet (7) est connecté par engagement par force ou par coopération de forme pour recevoir des câbles (8), des conduites ou des tuyaux.

11. Joint selon la revendication 10, **caractérisé en ce que** le dispositif de retenue (12) présente une contre-dépouille (13) dans laquelle une saillie (14) de configuration adaptée du dispositif de fixation (3) est encliquetée pour recevoir des câbles (8), des conduites ou des tuyaux.

12. Joint selon l'une quelconque des revendications 1 à 11, **caractérisé en ce que** le corps de support (1) et/ou le support intérieur (6) se composent d'un matériau métallique ou polymère.

13. Agencement d'étanchéité comprenant un joint d'étanchéité selon l'une quelconque des revendications 1 à 12, et deux parties de boîtier (15, 16) à rendre étanche l'une de l'autre, **caractérisé en ce que** le joint relie l'une à l'autre, de manière hermétique, les parties de boîtier (15, 16) espacées axialement l'une de l'autre.
